# EUROPEAN PATENT SPECIFICATION

(11) **EP 3 616 111 B1**
(45) Date of publication and mention of the grant of the patent: **08.06.2022**
(21) Application number: 18792273.7
(22) Date of filing: 26.04.2018
(51) Int. Cl.: G06F 21/33, G06F 21/60, H04L 29/06, H04L 29/08

(54) **SYSTEM AND METHOD FOR GENERATING ACCESS CREDENTIALS**
SYSTEM UND VERFAHREN ZUR GENERIERUNG VON ZUGANGSDATEN
SYSTÈME ET PROCÉDÉ PERMETTANT DE GÉNÉRER DES JUSTIFICATIFS D'ACCÈS

(30) Priority: 27.04.2017 US 201715498963
(43) Date of publication of application: 04.03.2020
(73) Proprietor: Visa International Service Association, Foster City, CA 94404 (US)
(72) Inventor: RAVI, Abhishek, Singapore 600122 (SG); HRIBOVSEK, Francois, Singapore 45943 (SG); CHEW, Kok Seng, Singapore 310116 (SG); OCTORIO, Ardi, Jakarta 14350 (ID)
(74) Representative: EIP
(86) International application number: PCT/US2018/029608
(87) International publication number: WO 2018/200842

(56) References cited:
- US-A1- 2010 088 509
- US-A1- 2010 100 928
- US-A1- 2012 317 624
- US-A1- 2012 317 624
- US-A1- 2012 317 626
- US-A1- 2016 134 633
- US-A1- 2016 134 633

## Description

### BACKGROUND

The issuance of access credentials that might be embodied on or by devices such as passports, payment cards, and access badges is time consuming. For example, prior to the issuance of such access credentials, extensive verification processes need to take place. As an illustration, a user trying to obtain a drivers license needs to provide a significant amount of information and documentation before the drivers license can be issued. The process of reviewing the information by an authorizing entity takes a significant amont of time, and the drivers license will not be issued until the review is completed. The conventional process of obtaining access credentials is also inconvenient, since the user may need to go to a specific location to provide the information to obtain the credentials.

Embodiments of the invention address these and other problems individually and collectively.

US 2012/0317624 A1 discusses a software application or website transmitting to a service provider a request to provide access to a protected resource on behalf of a user. The service provider forwards the request including a request token to a controller, which determines whether to authorize the request. If the request is authorized, the controller authorizes the request token and the service provider forward the authorized request token to the user.

### SUMMARY

Embodiments of the invention are directed to more effective and efficient ways to generate access credentials.

The invention is defined by the independent claims. Further embodiments are described by the dependent claims.

Further details regarding embodiments of the invention can be found in the Detailed Description and the Figures.

### BRIEF DESCRIPTION OF THE DRAWINGS

FIG. 1 shows a block diagram of a system according to an embodiment of the invention. The system can be used to access resources such as goods and services from a resource provider.
FIG. 2 shows a block diagram of an exemplary communication device according to an embodiment of the invention.
FIG. 3 shows a block diagram of an exemplary resource provider computer according to an embodiment of the invention.
FIG. 4 shows a block diagram of an authorizing entity computer according to an embodiment of the invention.
FIG. 5 shows a flow diagram illustrating a method according to embodiments of the invention.
FIGs. 6A-6E show user interfaces that might be appear on a communication device in embodiments of the invention.
FIG. 7 shows a block diagram illustrating a system for accessing a resource such as restricted data.

### DETAILED DESCRIPTION

Embodiments of the present invention are directed to methods and systems that provide access credentials in real time. By using embodiments of the invention, the user may access or specific resources without delay.

Prior to discussing specific embodiments of the invention, some terms may be described in detail.

A "communication device" may comprise any suitable electronic device that may have remote communication capabilities. Examples of remote communication capabilities include using a mobile phone (wireless) network, wireless data network (e.g. 3G, 4G or similar networks), Wi-Fi, Wi-Max, or any other communication medium that may provide access to a network such as the Internet or a private network. Examples of communication devices include mobile phones (e.g. cellular phones), PDAs, tablet computers, net books, laptop computers, personal music players, hand-held specialized readers, etc. Further examples of communication devices include wearable devices, such as smart watches, fitness bands, ankle bracelets, rings, earrings, etc., as well as automobiles with remote communication capabilities. A communication device may comprise any suitable hardware and software for performing such functions, and may also include multiple devices or components (e.g. when a device has remote access to a network by tethering to another device - i.e. using the other device as a modem - both devices taken together may be considered a single mobile device).

A "payment device" may be any suitable device that may be used to conduct a financial transaction, such as to provide payment credentials to a merchant. The payment device may be a software object, a hardware object, or a physical object. As examples of physical objects, the payment device may comprise a substrate such as a paper or plastic card, and information that is printed, embossed, encoded, or otherwise included at or near a surface of an object. A payment device may be used to make a payment transaction. Suitable payment devices can be hand-held and compact so that they can fit into a user's wallet and/or pocket (e.g., pocket-sized). Example payment devices may include smart cards, magnetic stripe cards, keychain devices (such as the Speedpass^{™} commercially available from Exxon-Mobil Corp.), etc. Other examples of payment devices include pagers, payment cards, security cards, access cards, smart media, transponders, and the like. If the payment device is in the form of a debit, credit, or smartcard, the payment device may also optionally have features such as magnetic stripes. Such devices can operate in either a contact or contactless mode. In some embodiments, a mobile communication device can function as a payment device (e.g., a mobile communication device can store and be able to transmit payment credentials for a transaction).

A "credential" may be any suitable information that serves as reliable evidence of worth, ownership, identity, or authority. A credential may be a string of numbers, letters, or any other suitable characters, as well as any object or document that can serve as confirmation of a fact in question. Examples of credentials include value credentials, identification cards, certified documents, access cards, passcodes and other login information, etc.

A "restricted access credential" may be a credential that may have certain use conditions. The restricted access credential may have limited duration and limited permissions. For example, a restricted access credential may only be used for accessing certain types of resources (e.g., certain types of data), used up to certain value amounts, used only with certain resource providers, limited to a specific number of transactions (e.g., one transaction), etc. Other restrictions may relate to the time periods in which they may be used. Restricted access credentials may also include payment credentials that have some restriction on their use. Examples of restricted account credentials may include payment credentials, payment tokens, account identifiers such as e-mail addresses, transit account numbers, medical record account numbers, public keys, user names, etc.

"Payment credentials" may include any suitable information associated with an account (e.g., a payment account and/or payment device associated with the account). Such information may be directly related to the account or may be derived from information related to the account. Examples of account information may include a PAN (primary account number or "account number"), a payment token, a user name, expiration date, CW (card verification value), dCVV (dynamic card verification value), CW2 (card verification value 2), CVC3 card verification values, etc.

A "token" may be a substitute value for a credential. A token may be a string of numbers, letters, or any other suitable characters. Examples of tokens include payment tokens, access tokens, personal identification tokens, etc.

A "payment token" may include an identifier for a payment account that is a substitute for an account identifier, such as a primary account number (PAN). For example, a payment token may include a series of alphanumeric characters that may be used as a substitute for an original account identifier. For example, a token "4900 0000 0000 0001" may be used in place of a PAN "4147 0900 0000 1234." In some embodiments, a payment token may be "format preserving" and may have a numeric format that conforms to the account identifiers used in existing transaction processing networks (e.g., ISO 8583 financial transaction message format). In some embodiments, a payment token may be used in place of a PAN to initiate, authorize, settle or resolve a payment transaction or represent the original credential in other systems where the original credential would typically be provided. In some embodiments, a payment token may be generated such that the recovery of the original PAN or other account identifier from the token value may not be computationally derived. Further, in some embodiments, the token format may be configured to allow the entity receiving the token to identify it as a token and recognize the entity that issued the token.

"Tokenization" is a process by which data is replaced with substitute data. For example, a payment account identifier (e.g., a primary account number (PAN)) may be tokenized by replacing the primary account identifier with a substitute number (e.g. a token) that may be associated with the payment account identifier. Further, tokenization may be applied to any other information that may be replaced with a substitute value (i.e., token). Tokenization enhances transaction efficiency and security.

A "token issuer," "token provider" or "token service system" can include a system that services tokens. In some embodiments, a token service system can facilitate requesting, determining (e.g., generating) and/or issuing tokens, as well as maintaining an established mapping of tokens to primary account numbers (PANs) in a repository (e.g., token vault). In some embodiments, the token service system may establish a token assurance level for a given token to indicate the confidence level of the token to PAN binding. The token service system may include or be in communication with a token vault where the generated tokens are stored. The token service system may support token processing of payment transactions submitted using tokens by de-tokenizing the tokens to obtain the actual PANs. In some embodiments, a token service system may include a tokenization computer alone, or in combination with other computers such as a transaction processing network computer. Various entities of a tokenization ecosystem may assume the roles of the token service provider. For example, payment networks and issuers or their agents may become the token service provider by implementing the token services according to embodiments of the present invention.

An "application" may be computer code or other data stored on a computer readable medium (e.g. memory element or secure element) that may be executable by a processor to complete a task.

A "user" may include an individual. In some embodiments, a user may be associated with one or more personal accounts and/or mobile devices. The user may also be referred to as a cardholder, account holder, or consumer.

A "resource provider" may be an entity that can provide resources such as goods, services, information, and/or access. Examples of resource providers include merchants, data providers, governmental agencies, transit agencies, etc. A "merchant" may typically be an entity that engages in transactions and can sell goods or services, or provide access to goods or services.

An "acquirer" may typically be a business entity (e.g., a commercial bank) that has a business relationship with a particular merchant or other entity. Some entities can perform both issuer and acquirer functions. Some embodiments may encompass such single entity issuer-acquirers. An acquirer may operate an acquirer computer, which can also be generically referred to as a "transport computer."

An "authorizing entity" may be an entity that authorizes a request. Examples of an authorizing entity may include an issuer, a governmental agency, a document repository, an access administrator, etc. An "issuer" may typically refer to a business entity (e.g., a bank) that maintains an account for a user. An issuer may also issue payment credentials stored on a user device, such as a cellular telephone, smart card, tablet, or laptop to the consumer.

An "authorization request message" may be an electronic message that requests authorization for a transaction. In some embodiments, it is sent to a transaction processing computer and/or an issuer of a payment card to request authorization for a transaction. An authorization request message according to some embodiments may comply with ISO 8583, which is a standard for systems that exchange electronic transaction information associated with a payment made by a user using a payment device or payment account. The authorization request message may include an issuer account identifier that may be associated with a payment device or payment account. An authorization request message may also comprise additional data elements corresponding to "identification information" including, by way of example only: a service code, a CVV (card verification value), a dCW (dynamic card verification value), a PAN (primary account number or "account number"), a payment token, a user name, an expiration date, etc. An authorization request message may also comprise "transaction information," such as any information associated with a current transaction, such as the transaction amount, merchant identifier, merchant location, acquirer bank identification number (BIN), card acceptor ID, information identifying items being purchased, etc., as well as any other information that may be utilized in determining whether to identify and/or authorize a transaction.

An "authorization response message" may be a message that responds to an authorization request. In some cases, it may be an electronic message reply to an authorization request message generated by an issuing financial institution or a transaction processing computer. The authorization response message may include, by way of example only, one or more of the following status indicators: Approvaltransaction was approved; Decline -- transaction was not approved; or Call Centerresponse pending more information, merchant must call the toll-free authorization phone number. The authorization response message may also include an authorization code, which may be a code that a credit card issuing bank returns in response to an authorization request message in an electronic message (either directly or through the transaction processing computer) to the merchant's access device (e.g. POS equipment) that indicates approval of the transaction. The code may serve as proof of authorization.

A "server computer" may include a powerful computer or cluster of computers. For example, the server computer can be a large mainframe, a minicomputer cluster, or a group of servers functioning as a unit. In one example, the server computer may be a database server coupled to a Web server. The server computer may be coupled to a database and may include any hardware, software, other logic, or combination of the preceding for servicing the requests from one or more client computers. The server computer may comprise one or more computational apparatuses and may use any of a variety of computing structures, arrangements, and compilations for servicing the requests from one or more client computers.

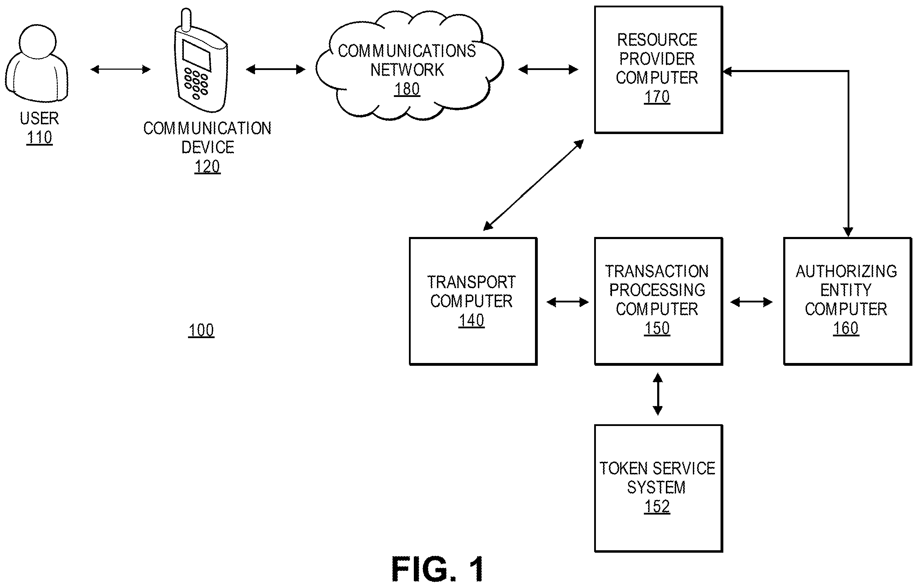

FIG. 1 shows a system 100 comprising a number of components. The system 100 comprises a communication device 120, which may be associated with a user 110. The communication device 120 may be in communication with a resource provider computer 130 via a communications network 180. Suitable communications networks may be any one and/or the combination of the following: a direct interconnection; the Internet; a Local Area Network (LAN); a Metropolitan Area Network (MAN); an Operating Missions as Nodes on the Internet (OMNI); a secured custom connection; a Wide Area Network (WAN); a wireless network (e.g., employing protocols such as, but not limited to a Wireless Application Protocol (WAP), I-mode, and/or the like); and/or the like. Messages between the computers, networks, and devices may be transmitted using a secure communications protocols such as, but not limited to, File Transfer Protocol (FTP); HyperText Transfer Protocol (HTTP); Secure Hypertext Transfer Protocol (HTTPS), Secure Socket Layer (SSL), ISO (e.g., ISO 8583) and/or the like.

The communication device 120, the resource provider computer 130, a transport computer 140, a transaction processing computer 150, and an authorizing entity computer 160 may all be in operative communication with each other through any suitable communication channel or communications network.

The user 110 can use the communication device 120 to conduct transactions with a resource provider associated with the resource provider computer 130. Authorization request messages for those transactions submitted by the resource provider computer 130 may be sent to the transport computer 140 (which may be an acquirer computer associated with an acquirer). The transport computer 140 may be associated with the resource provider computer 130, and may manage authorization requests and manage an account on behalf of the resource provider associated with the resource provider computer 130.

As shown in FIG. 1, a transaction processing computer 150 may be disposed between the transport computer 140 and the authorizing entity computer 160. The transaction processing computer 150 may include data processing subsystems, networks, and operations used to support and deliver authorization services, exception file services, and clearing and settlement services. For example, the transaction processing computer 150 may comprise a server coupled to a network interface (e.g., by an external communication interface), and databases of information. The transaction processing computer 150 may be representative of a transaction processing network. An exemplary transaction processing network may include VisaNet^{™}. Transaction processing networks such as VisaNet^{™} are able to process credit card transactions, debit card transactions, and other types of commercial transactions. VisaNet^{™}, in particular, includes a VIP system (Visa Integrated Payments system) which processes authorization requests and a Base II system which performs clearing and settlement services. The transaction processing computer 150 may use any suitable wired or wireless network, including the Internet.

FIG. 1 also shows a token service system 152 accessible to the transaction processing computer 150. The token service system 152 may store payment tokens and real account numbers corresponding to the payment tokens.

The authorizing entity computer 160 may issue and manage an account of the user 110. The account can be tied to the restricted access credential. The authorizing entity computer 160 may authorize transactions that involve the payment account. Before authorizing a transaction, the authorizing entity computer 160 may authenticate and process credentials received in an authorization request message and check to see if there is available credit or funds in an account associated with the restricted access credentials. The authorizing entity computer 160 may also receive and/or determine a risk level associated with the transaction, and may weigh the risk when deciding whether or not to authorize the transaction. If the authorizing entity computer 160 receives an authorization request that includes a payment token, the authorizing entity computer 160 may be able to de-tokenize the payment token in order to obtain the associated payment credentials. In some embodiments, the restricted access credential may be a token such as a payment token.

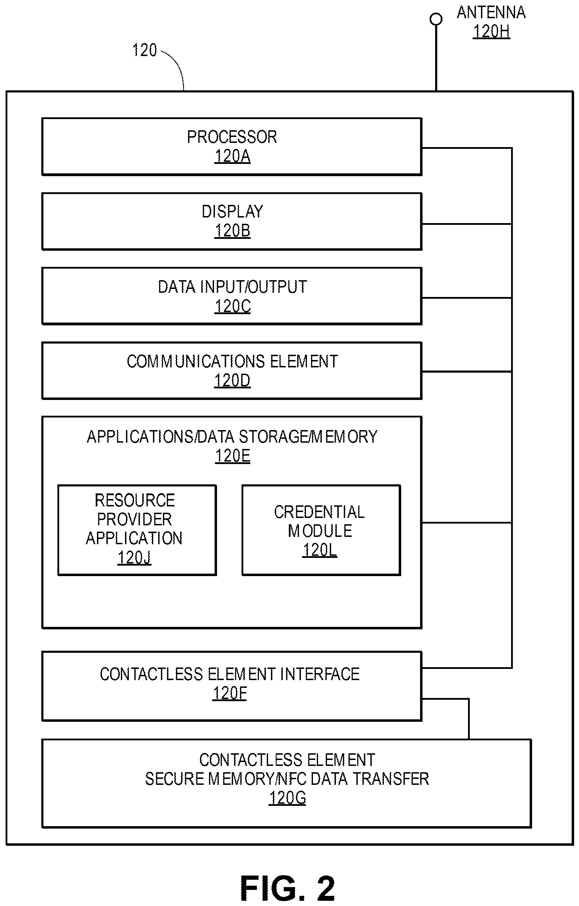

An example of a communication device 120 in the form of a mobile device is shown in FIG. 2. The communication device 120 may include circuitry that is used to enable certain device functions, such as telephony. The functional elements responsible for enabling those functions may include a processor 120A that can execute instructions that implement the functions and operations of the device. Processor 120A may access memory 120E (or another suitable data storage region or element) to retrieve instructions or data used in executing the instructions. Data input/output elements 120C, such as a camera, keyboard or touchscreen, may be used to enable a user to operate the communication device 120 and input data (e.g., user authentication data). Data input/output elements may also be configured to output data (via a speaker, for example). Display 120B may also be used to output data to a user. Communications element 120D may be used to enable data transfer between communication device 120 and a wired or wireless network (via antenna 120H, for example) to assist in connectivity to the Internet or other network, and enabling data transfer functions. Communication device 120 may also include contactless element interface 120F to enable data transfer between contactless element 120G and other elements of the device, where contactless element 120G may include a secure memory and a near field communications data transfer element (or another form of short range communications technology).

The memory 120E may comprise a resource provider application 120J and a credential module 120L, and any other suitable module or data.

The resource provider application 120J may comprise code, executable by the processor 120A, to provide a user interface for the user 110 to provide input and initiate, facilitate, and manage transactions using the communications device 120. The resource provider application 120J may be able to store and/or access a payment token and/or payment credentials. The resource provider application 120J may also store, using the processor 120A, an issuer-specific key, or any other suitable encryption means. The resource provider application 120J, in conjunction with the processor 120A, may be able to cause the communication device 120 to transmit the payment token and/or payment credentials in any suitable manner (e.g., NFC, QR code, etc.).

The credential module 120L may comprise code, executable by the processor 120A, to request a restricted access credential and/or store the restricted access credential. Such restricted access credentials may be used in a physical point of service (e.g., physical point of sale, physical point of access, etc.) transaction.

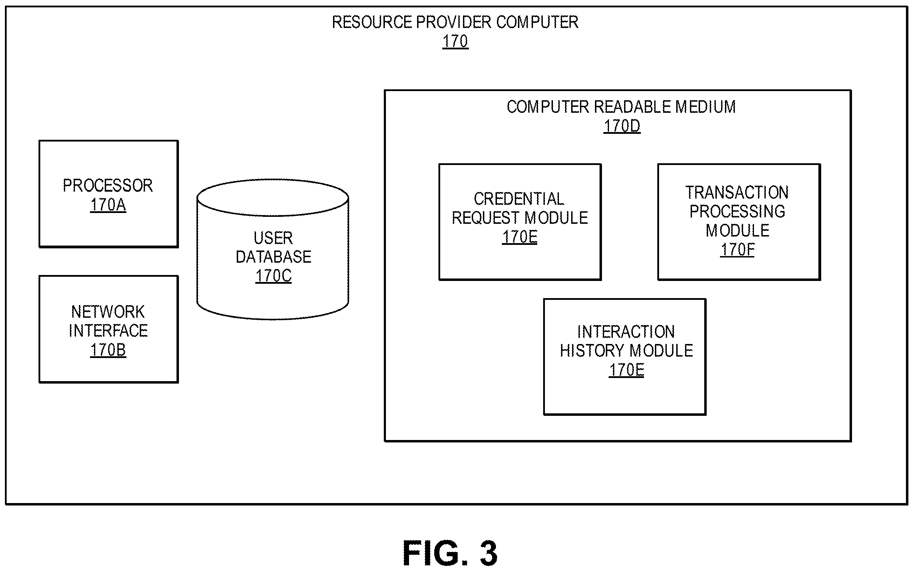

An example of a resource provider computer 170 is shown in FIG. 3. The resource provider computer 170 comprises a data processor 170A coupled to a network interface 170B, a user database 170C, and a computer readable medium 170D. The computer readable medium 170D may comprise a credential request module 170E, a transaction processing module 170F, and an interaction history module 170G.

The credential request module 170E may comprise code, executable by the processor 170A, for requesting a restricted access credential from an authorizing entity computer.

The transaction processing module 170F may comprise code, executable by the processor 170A, to process payment or other types of transactions. It may comprise code, executable by the processor 170A, to generate authorization request messages, and receive and output authorization response messages received from an authorizing entity computer.

The interaction history module 170E may comprise code, executable by the processor 170A, to create and store interaction history data of various users in the user database 170C. The interaction history data may include suitable data relating to a history of interaction between the user and the resource provider. For example, interaction history data may include data relating to the number of times that the user has interacted with the particular resource provider, the value of the transactions conducted with the particular resource provider, and/or the frequency of interaction between the resource provider and the user. In some embodiments, the interaction history data may also include a summary report provided by the resource provider computer 170. For example, the summary report may summarize any interactions between the resource provider and the user 110. It may include information such as the number of claims and chargebacks requested by the user 110, any fraud scores that may indicate that the user 110 may or may not be trustworthy, etc.

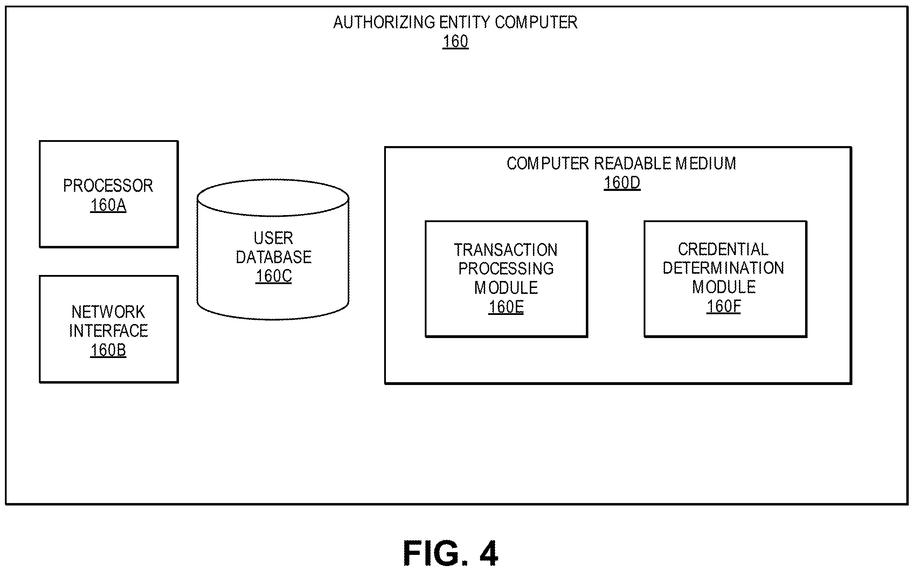

An example of the authorizing entity computer 160, according to some embodiments of the invention, is shown in FIG. 4. The transaction processing computer 160 comprises a processor 160A, a network interface 160B, a credential database 160C, and a computer readable medium 160D.

The computer readable medium 160D may comprise a transaction processing module 160E, a credential determination module 160F, and any other suitable software module.

The transaction processing module 160E may comprise code that causes the processor 160A to process transactions. For example, the transaction processing module 160E may contain logic that causes the processor 160A to analyze transaction risk, and to determine if the transaction should be approved or declined.

The credential determination module 160F may comprise code that causes the processor 160A to determine an appropriate credential. The appropriate credential may be determined by generating the credential, or selecting the credential from a pre-existing pool of credentials. If it is generated, the credential can be generated using any suitable algorithm.

The credential determination module 160F may also comprise code, executable by the processor 160A, to evaluate the interaction history data and/or user data that was received from the resource provider computer 170 to determine if a credential should be issued and/or if any restrictions should be placed on the credential. User data such as biometric data, address information, etc. may be checked against local blacklists to determine if the user can be issued the restricted use credential.

In some embodiments, the restrictions placed on the restricted access credential may vary depending upon the level or quality of the interaction between the resource provider computer 170 and the user 110. For example, if a user 110 interacts frequently with the resource provider computer 170, then the restricted access credential may have fewer restrictions than a similar restricted access credential that may be provided to another user that interacts less frequently with the resource provider computer 170. Illustratively, if the user 110 interacts with the resource provider computer 170 by purchasing goods twice per week and spends over $100 in each interaction and the resource provider does not experience any problems in those transactions, then the restricted access credential may be valid for one year, and may have a transaction limit of $2000. On the other hand, if another user has only interacted with the resource provider computer 170 one time in the past in a transaction worth $50, then the restricted access credential that is issued to that user may have a limit of $100 and may only be valid for one week.

Any suitable type of restriction may be placed on the restricted access credential provided by the credential determination module 160F. Examples of restrictions may include, but are not limited to, the type of resource provider, the time period in which the restricted access credential may be used, the limit on the value of the restricted access credential a limitation on the people that my use the restricted access credential token, the frequency of use of the restricted access credential.

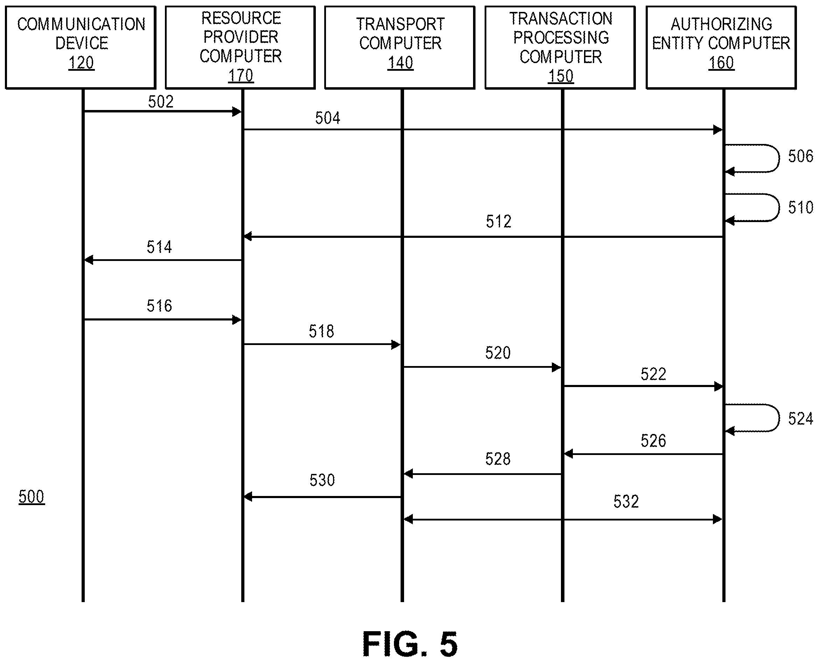

A method according to an embodiment of the invention can be described with reference to FIGs. 1-6.

Initially, a user 110 may be in possession of a communication device 120. The user 110 may use the communication device 120 to communicate with the resource provider computer 170. In some embodiments, the mobile communication device may communicate with the resource provider computer 170 via a resource provider application 120J, or via a browser on the communication device 120.

Before or after selecting resources to be obtained (e.g., goods or services offered by the resource provider), the user 110 may request a restricted access credential so that the user may conduct the transaction with the resource provider. In step 502, the communication device 102 may transmit a request to the resource provider computer 170. A virtual card provisioning API (application programming interface) may be used to provide for an interface between the resource provider computer 170/resource provider application 120J, and the authorizing entity computer 160.

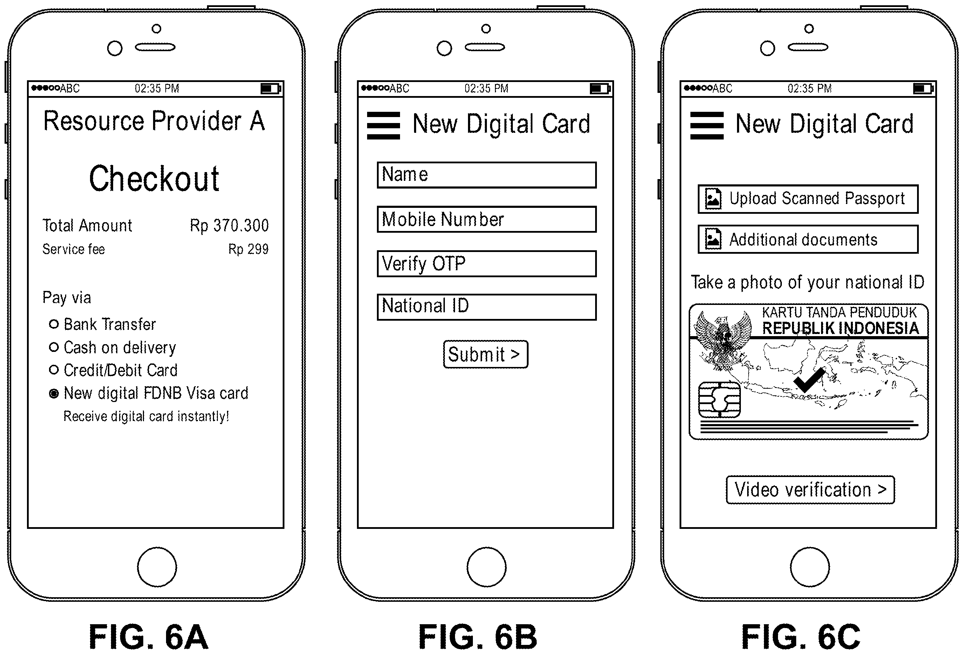

As illustrated in FIG. 6A, the communication device 120 may display an option to pay for the resource provided by the resource provider operating the resource provider computer 170 using a bank transfer, cash on delivery, an existing credit or debit card, or a newly issued credit card. The newly issued credit card may an example of a restricted access credential. In this example, the user may then choose the option to use the newly issued credit card to pay for the transaction, and a user interface like the one shown in FIG. 6B may be shown.

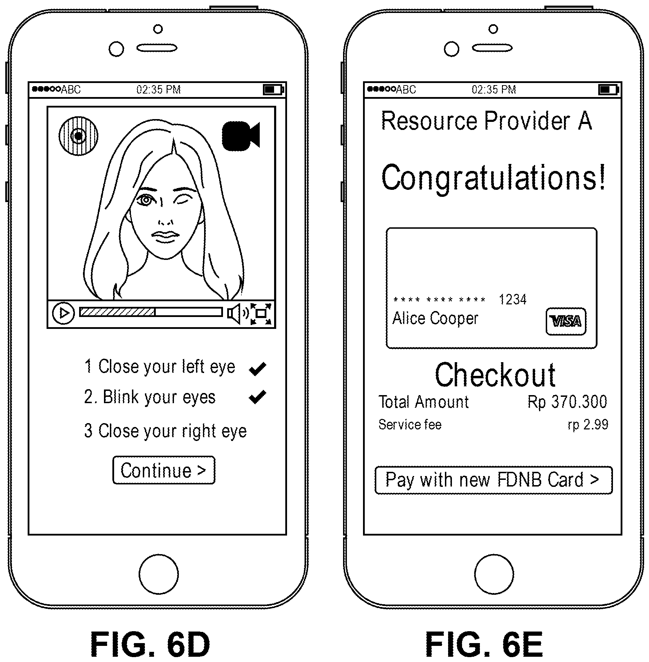

Once the option for the newly issued credit card is selected, user data may be collected by the communication device 120. As shown in FIG. 6B, the user 110 may enter his or her name, mobile phone number, a one time password (OTP) that was received on a different device, and/or another user identifier such as a national ID, social security number, drivers license number, etc. As shown in FIG. 6C, additional documentation may be obtained by the communication device 120. A camera in the communication device 120 may be used to capture of a physical authentication token such as a picture of a passport. The user may also be required to provide other types of documentation as evidence that the user is an authentic user. Then, as shown in FIG. 6D, the communication device 120 may be used to take a picture or video of the user 110. Instructions may be displayed for the user to follow. In addition, the user may be asked to provide other types of biometric samples such as still photos, fingerprints, retinal scans, voice samples, etc. All of this information, or more or less than this information may be transmitted from the communication device 120 to the resource provider computer 170. For example, additional information may also include a user ID (e.g., an e-mail address or username) associated with the resource provider operating the resource provider computer 170.

Once this request is received by the resource provider computer 170, the resource provider computer 170 may determine interaction history data for the particular user 110 conducting the transaction. The interaction history data may include suitable data relating to a history of interaction between the user and the resource provider. For example, interaction history data may include data relating to the number of times that the user has interacted with the particular resource provider, the value of the transactions conducted with the particular resource provider, and/or the frequency of interaction between the resource provider and the user.

At step 504, the communication device 120 may transmit the interaction history data and the user data to an authorizing entity computer 160. In step 506, the authorizing entity computer 160 can analyze the user data and the interaction history data, and determine, in substantially real time (e.g., less than 5 minutes, or less than 1 minute), if a restricted access credential can be issued for the communication device 102. Note that in some embodiments, the user of the communication device 102 and the communication device 102 itself may not have had prior contact or communication with the authorizing entity computer 160.

In some embodiments, data representing a biometric sample of the user and data representing a physical authentication token authenticating the user are transmitted from the communication device 120 to the resource provider computer 170. The resource provider computer 170 subsequently transmits the data representing a biometric sample of the user 110 and data representing a physical authentication token authenticating the user 110 to the authorizing entity computer 160 along with the interaction history data.

In step 510, if the authorizing entity computer 160 determines that the restricted access credential can be issued, then the authorizing entity computer 160 may determine the restricted access credential. The authorizing entity computer 160 may determine the restricted access credential by either generating the restricted access credential, or selecting the restricted access credential from a pool of pre-existing restricted access credentials. The restricted access credentials may include a first portion such as a BIN (bank identification number) that identifies the authorization entity associated with the authorizing entity computer 160, and a remaining portion that identifies a specific account. The remaining portion may be generated systematically or randomly. In some embodiments, the restricted access credential may be resemble a primary account number with 16, 18, or 19 digits. The first six digits of the restricted access credential may comprise a BIN or bank identifier number associated with the authorizing entity computer 160.

In some embodiments, once the restricted access credential is determined, it may be stored in a card payment management system, or a core banking system/third party repository. In the card payment management system, the restricted access credential may be stored in column in a table. The table may have other columns including user ID column for user IDs, and a name column for the names of the users. Other columns may also be present. Such columns may include columns for any of the user data or interaction history data received from the communication device 120 or the resource provider computer 170. In the core banking system, the restricted access credential may be stored in a column, where other columns include a customer ID and a balance column.

In step 512, the restricted access credential may be transmitted to the resource provider computer 170. In some embodiments, the restricted access credential may be encrypted with an encryption key prior to transmitting it to the resource provider computer 170. The resource provider computer 170 may store a corresponding decryption key to decrypt the encrypted restricted access credential.

At this point, the resource provider computer 170 may store the received restricted access credential in the user database 170C and may link it to the user's user identifier for that resource provider. As shown in step 514, the user 110 may be notified that the restricted access credential has been approved and generated as shown in FIG. 6E. The restricted access credential may then be used to conduct the current and/or future transactions between the user 110 and the resource provider computer 170. Alternatively or additionally, the restricted access credential can be transmitted to the communication device 120 for storage therein. Any restrictions on the restricted access credential may also be displayed to the user on the communication device 120.

In some embodiments, the resource provider operating the resource provider computer 170 may not only have a presence on the Internet, but may also have physical points of interaction (e.g., physical stores) at which the restricted access credential may be used. In such embodiments, the restricted access credential may be also stored on the communication device 120.

The user 110 may interact with the communication device 120 to confirm that the user 110 wants to use the restricted access credential to conduct the transaction. In step 516, a message may then be sent from the communication device 102 to the resource provider computer 170 with the confirmation. After the message is received by the resource provider computer 170, the resource provider computer may generate an authorization request message comprising the restricted access credential.

In step 518, the authorization request message may be transmitted to the transport computer 140. After the transport computer 140 receives the authorization request message, in step 520, the authorization request message is transmitted to the transaction processing computer. After the transaction processing computer 150 receives the authorization request message, the transaction processing computer 150 may determine the appropriate authorizing entity computer 160 to route it to and may route it to that authorizing entity computer 160 in step 522.

In step 524, the authorizing entity computer 160 may then determine if the transaction should or should not be authorized. The restricted access credential may have certain conditions associated with it and the authorizing entity computer 160 may check to see if those conditions have been satisfied. For example, the generated restricted access credential may not be used over a transaction limit, for example, of $200. The authorizing entity computer 160 may then check to see if the transaction amount in the authorization request message is over $200. If it is, then the transaction may be declined. If it is not, then the transaction may be approved, subject to other limitations such as acceptable fraud scores.

At step 526, the authorizing entity computer 160 transmits an authorization response message to the transaction processing computer 160. After receiving the authorization response message, the transaction processing computer 150 forwards the authorization response message back to the transport computer 140 in step 528. In step 530, after the transport computer 140 receives the authorization response message, it may forward it to the resource provider computer 170.

In some embodiments, the restricted access credential may be a payment token. If this is the case, then after the transaction processing computer 150 receives the authorization request message, the transaction processing computer 150 may retrieve a real credential (e.g., a real PAN) from the token service system 152. The transaction processing computer 150 may then modify the authorization request message received from the transport computer 140 to include the real credential instead of the payment token. It may then transmit the authorization request message to the authorizing entity computer 160, and the authorizing entity computer 160 may determine whether or not to authorize the transaction. As noted above, the authorization entity computer 160 may generate and transmit an authorization response message with the real credential to the transaction processing computer 150. The transaction processing computer 170 may then replace the real credential with the payment token, and may forward the modified authorization response message to the resource provider computer 170 via the transport computer 140. The resource provider computer 170 may then store the payment token for future use or further processing (e.g., refunds or chargebacks).

If the transaction was approved, then at a later time, a clearing and settlement process may occur between the transport computer 140, the transaction processing computer 150, and the authorizing entity computer 160. The authorizing entity computer 160 may also invoice the user of the communication device 110 for the transaction.

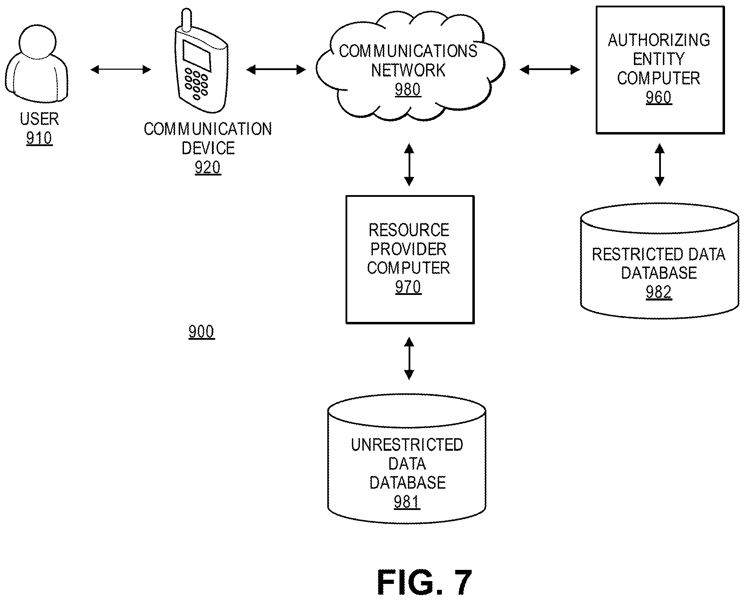

FIG. 7 shows another system 900 according to an embodiment of the invention. In this system 900, the user 910, the communication device 920, the resource provider computer 970, authorizing entity computer 960, and the communications network 980 may be similar to the previously described entities. However, in this embodiment, the user 910 may wish to gain access to restricted data in a restricted data database 982, after accessing data in an unrestricted data database 981. The restricted data database 982 may store sensitive information such as medical records, financial records, or personal data. The unrestricted data database 981 may store data that is less sensitive than the restricted data in the restricted data database 982. For example, the unrestricted data in the unrestricted data database 981 may include general information regarding public reviews of restaurants, while the restricted data database 982 may include reviews of restaurants provided by prominent restaurant reviewers and other data such as the wait times for the restaurants, and the menus of the restaurants. The above-described process for issuing a restricted access credential as described above with respect to FIGs. 1-6 may be utilized to gain access to access data within the restricted data database 982. Thus, unlike the specific embodiment described with respect to FIG. 1, the embodiments described with respect to FIG. 7 do not involve the use of currency.

As an illustration, the user 910 may use the communication device 920 to access restricted data in the restricted data database 982. To do so, the user 910 may need a restricted access credential. The resource provider computer 970 may obtain user data from the communication device 920 (as described above), and may collect interaction history data between the user 910/communication device 920 and the resource provider computer 970. The interaction history data may be based upon the user's use of and access to the data in the unrestricted data database 981. The user data and the interaction history data may be transmitted by the resource provider computer 970 to the authorizing entity computer 960. As in the examples above, the authorizing entity computer 960 may determine if a restricted access credential can be provided to the user 910. If so, then the restricted access credential may be provided to the resource provider computer 970 and/or the communication device 920.

The user 910 may then use the restricted access credential to obtain the data in the restricted data database 982. At a later time, the user 910 may log into the resource provider computer 970 with a username and/or password. The user may use the restricted access credential to access a specific type of data in the restricted data database 982. An authorization request message with the restricted access credential and the requested data is sent to the authorizing entity 960 and if the conditions associated with the restricted access credential are satisfied, then the user may be allowed to access the data in the restricted data database 982.

Embodiments of the invention have a number of advantages. As noted above, embodiments of the invention can be used to issue a restricted access credential in real time, even though the authorizing entity or authorizing entity computer associated with the authorizing entity does not have a prior relationship with the user requesting the restricted access credential. Also, because the restricted access credential can be used only under limited circumstances or conditions, the risk the authorizing entity is limited, even though the authorizing entity made the decision to issue the restricted access credential with limited information.

As described, the inventive service may involve implementing one or more functions, processes, operations or method steps. In some embodiments, the functions, processes, operations or method steps may be implemented as a result of the execution of a set of instructions or software code by a suitably-programmed computing device, microprocessor, data processor, or the like. The set of instructions or software code may be stored in a memory or other form of data storage element which is accessed by the computing device, microprocessor, etc. In other embodiments, the functions, processes, operations or method steps may be implemented by firmware or a dedicated processor, integrated circuit, etc.

Any of the software components or functions described in this application may be implemented as software code to be executed by a processor using any suitable computer language such as, for example, Java, C++ or Perl using, for example, conventional or object-oriented techniques. The software code may be stored as a series of instructions, or commands on a computer-readable medium, such as a random access memory (RAM), a read-only memory (ROM), a magnetic medium such as a hard-drive or a floppy disk, or an optical medium such as a CD-ROM. Any such computer-readable medium may reside on or within a single computational apparatus, and may be present on or within different computational apparatuses within a system or network.

While certain exemplary embodiments have been described in detail and shown in the accompanying drawings, it is to be understood that such embodiments are merely illustrative of and not intended to be restrictive of the broad invention, and that this invention is not to be limited to the specific arrangements and constructions shown and described, since various other modifications may occur to those with ordinary skill in the art.

As used herein, the use of "a", "an" or "the" is intended to mean "at least one", unless specifically indicated to the contrary.

## Claims

1. A method comprising:
receiving, by a resource provider computer (170) operated by a resource provider, a request from a communication device (120) operated by a user (110) to obtain a restricted access credential to access a resource, the request including data representing a biometric sample of the user (110) obtained via the communication device (120), the data representing the biometric sample generated in response to instructions provided for the user (110) via the communication device (120) for obtaining the biometric sample;
generating, by the resource provider computer (170), interaction history data relating to past interactions between the resource provider computer (170) and the communication device (120);
transmitting, by the resource provider computer (170), the interaction history data relating to the past interactions and data representing the biometric sample, to an authorizing entity computer (160), the authorizing entity computer (160) determining a restricted access credential in response to receipt of the interaction history data and the data representing the biometric sample; and
receiving, by the resource provider computer (170), the restricted access credential from the authorizing entity computer (160), wherein the restricted access credential allows the user of the communication device (120) to obtain the resource.

2. The method of claim 1, wherein the restricted access credential has a limited duration and has limited permissions.

3. The method of claim 1, wherein the resource includes online data.

4. The method of claim 1, wherein the interaction history data comprises a number of times the user (110) has interacted with the resource provider computer (170).

5. The method of claim 4, wherein the interaction history data comprises a value associated with the number of times the user (110) has interacted with the resource provider computer.

6. The method of claim 1, wherein the request further comprises data representing data representing a physical authentication token authenticating the user (110), and wherein the resource provider computer (170) transmits the data representing the physical authentication token authenticating the user to the authorizing entity computer (160) along with the interaction history data.

7. The method of claim 1, further comprising:
generating, by the resource provider computer (170), an authorization request message comprising the restricted access credential;
transmitting, by the resource provider computer (170), the authorization request message to the authorizing entity computer (160); and
receiving an authorization response message from the authorizing entity computer (160).

8. A computer comprising:
a processor (170A); and
a computer readable medium (170D), the computer readable medium (170D) comprising code, executable by the processor (170A), for implementing a method comprising:
receiving a request from a communication device (120) operated by a user (110) to obtain a restricted access credential to access a resource, the request including data representing a biometric sample of the user (110) obtained via the communication device (120), the data representing the biometric sample generated in response to instructions provided for the user (110) via the communication device (120) for obtaining the biometric sample;
generating interaction history data relating to past interactions between a resource provider computer (170) operated by a resource provider and the user (110) of the communication device (120);
transmitting the interaction history data relating to the past interactions and the data representing the biometric sample, to an authorizing entity computer (160), the authorizing entity computer (160) determining a restricted access credential in response to receipt of the interaction history data and the data representing the biometric sample; and
receiving the restricted access credential from the authorizing entity computer (160), wherein the restricted access credential allows the user (110) of the communication device (120) to obtain the resource.

9. The computer of claim 8, wherein the restricted access credential has a limited duration and has limited permissions.

10. The computer of claim 8, wherein the resource includes online data.

11. The computer of claim 8, wherein the interaction history data comprises a number of times the user (110) has interacted with the resource provider computer (170).

12. The computer of claim 11, wherein the interaction history data comprises a value associated with the number of times the user (110) has interacted with the resource provider computer (170).

13. The computer of claim 8, wherein the request further comprises data representing a physical authentication token authenticating the user (110).

14. The computer of claim 8, wherein the method further comprises:
generating an authorization request message comprising the restricted access credential;
transmitting the authorization request message to the authorizing entity computer (160); and
receiving an authorization response message from the authorizing entity computer (160).

15. A method comprising:
receiving, by an authorizing entity computer (160) from a resource provider computer (170), interaction history data relating to past interactions between the resource provider computer (170) and a user (110) operating a communication device (120) and data representing a biometric sample of the user (110) obtained via the communication device (120), the data representing the biometric sample generated in response to instructions provided for the user (110) via the communication device (120) for obtaining the biometric sample;
determining, by the authorizing entity computer (160), a restricted access credential in response to receiving the interaction history data and the data representing the biometric sample; and
transmitting, by the authorizing entity computer (160), the restricted access credential to the resource provider computer(160).

## Patentansprüche

1. Verfahren, umfassend:
Empfangen, durch einen Ressourcenanbietercomputer (170), der von einem Ressourcenanbieter betrieben wird, einer Anforderung von einer Kommunikationsvorrichtung (120), die von einem Benutzer (110) betrieben wird, um einen Berechtigungsnachweis mit beschränktem Zugriff für den Zugriff auf eine Ressource zu erhalten, wobei die Anforderung Daten beinhaltet, die eine biometrische Probe des Benutzers (110) darstellen, die über die Kommunikationsvorrichtung (120) erhalten wurde, wobei die Daten, die die biometrische Probe darstellen, in Reaktion auf Anweisungen erzeugt werden, die dem Benutzer (110) über die Kommunikationsvorrichtung (120) zum Erhalten der biometrischen Probe bereitgestellt werden;
Erzeugen, durch den Ressourcenanbietercomputer (170), von Interaktionsverlaufsdaten, die sich auf vergangene Interaktionen zwischen dem Ressourcenanbietercomputer (170) und der Kommunikationsvorrichtung (120) beziehen;
Übertragen, durch den Ressourcenanbietercomputer (170), der Interaktionsverlaufsdaten, die sich auf die vergangenen Interaktionen beziehen, und von Daten, die die biometrische Probe darstellen, an einen Autorisierungsentitätscomputer (160), wobei der Autorisierungsentitätscomputer (160) einen Berechtigungsnachweis mit beschränktem Zugriff in Reaktion auf den Empfang der Interaktionsverlaufsdaten und der Daten, die die biometrische Probe darstellen, bestimmt; und
Empfangen, durch den Ressourcenanbietercomputer (170), des Berechtigungsnachweises mit beschränktem Zugriff von dem Autorisierungsentitätscomputer (160), wobei der Berechtigungsnachweis mit beschränktem Zugriff dem Benutzer der Kommunikationsvorrichtung (120) ermöglicht, die Ressource zu erhalten.

2. Verfahren nach Anspruch 1, wobei der Berechtigungsnachweis mit beschränktem Zugriff eine begrenzte Dauer und eingeschränkte Berechtigungen hat.

3. Verfahren nach Anspruch 1, wobei die Ressource Online-Daten beinhaltet.

4. Verfahren nach Anspruch 1, wobei die
Interaktionsverlaufsdaten eine Anzahl von Malen umfassen, die der Benutzer (110) mit dem Ressourcenanbietercomputer (170) interagiert hat.

5. Verfahren nach Anspruch 4, wobei die
Interaktionsverlaufsdaten einen Wert umfassen, der mit der Anzahl an Malen, die der Benutzer (110) mit dem Ressourcenanbietercomputer interagiert hat, assoziiert ist.

6. Verfahren nach Anspruch 1, wobei die Anforderung ferner Daten umfasst, die Daten darstellen, die ein physisches Authentifizierungstoken darstellen, das den Benutzer (110) authentifiziert, und wobei der Ressourcenanbietercomputer (170) die Daten, die das physische Authentifizierungstoken darstellen, das den Benutzer authentifiziert, zusammen mit den Interaktionsverlaufsdaten an den Autorisierungsentitätscomputer (160) überträgt.

7. Verfahren nach Anspruch 1, ferner umfassend:
Erzeugen, durch den Ressourcenanbietercomputer (170), einer Autorisierungsanforderungsnachricht, die den Berechtigungsnachweis mit beschränktem Zugriff umfasst;
Übertragen, durch den Ressourcenanbietercomputer (170), der Autorisierungsanforderungsnachricht an den Autorisierungsentitätscomputer (160); und
Empfangen einer Autorisierungsantwortnachricht von dem Autorisierungsentitätscomputer (160).

8. Computer, umfassend:
einen Prozessor (170A); und
ein computerlesbares Medium (170D), wobei das computerlesbare Medium (170D) Code umfasst, der durch den Prozessor (170A) ausführbar ist, um ein Verfahren zu implementieren, das Folgendes umfasst:
Empfangen einer Anforderung von einer Kommunikationsvorrichtung (120), die von einem Benutzer (110) betrieben wird, um einen Berechtigungsnachweis mit beschränktem Zugriff für den Zugriff auf eine Ressource zu erhalten, wobei die Anforderung Daten beinhaltet, die eine biometrische Probe des Benutzers (110) darstellen, die über die Kommunikationsvorrichtung (120) erhalten wird, wobei die Daten, die die biometrische Probe darstellen, in Reaktion auf Anweisungen erzeugt werden, die dem Benutzer (110) über die Kommunikationsvorrichtung (120) zum Erhalten der biometrischen Probe bereitgestellt werden;
Erzeugen von Interaktionsverlaufsdaten, die sich auf vergangene Interaktionen zwischen einem Ressourcenanbietercomputer (170), der von einem Ressourcenanbieter betrieben wird, und dem Benutzer (110) der Kommunikationsvorrichtung (120) beziehen;
Übertragen der Interaktionsverlaufsdaten, die sich auf die vergangenen Interaktionen beziehen, und der Daten, die die biometrische Probe darstellen, an einen Autorisierungsentitätscomputer (160), wobei der Autorisierungsentitätscomputer (160) einen Berechtigungsnachweis mit beschränktem Zugriff in Reaktion auf den Empfang der Interaktionsverlaufsdaten und der Daten, die die biometrische Probe darstellen, bestimmt; und
Empfangen des Berechtigungsnachweises mit beschränktem Zugriff von dem Autorisierungsentitätscomputer (160), wobei der Berechtigungsnachweis mit beschränktem Zugriff dem Benutzer (110) der Kommunikationsvorrichtung (120) ermöglicht, die Ressource zu erhalten.

9. Computer nach Anspruch 8, wobei der Berechtigungsnachweis mit beschränktem Zugriff eine begrenzte Dauer und eingeschränkte Berechtigungen hat.

10. Computer nach Anspruch 8, wobei die Ressource Online-Daten beinhaltet.

11. Computer nach Anspruch 8, wobei die
Interaktionsverlaufsdaten eine Anzahl von Malen umfassen, die der Benutzer (110) mit dem Ressourcenanbietercomputer (170) interagiert hat.

12. Computer nach Anspruch 11, wobei die
Interaktionsverlaufsdaten einen Wert umfassen, der mit der Anzahl an Malen, die der Benutzer (110) mit dem Ressourcenanbietercomputer (170) interagiert hat, assoziiert ist.

13. Computer nach Anspruch 8, wobei die Anforderung ferner Daten umfasst, die ein physisches Authentifizierungstoken (110) darstellen, das den Benutzer authentifiziert.

14. Computer nach Anspruch 8, wobei das Verfahren ferner Folgendes umfasst:
Erzeugen einer Autorisierungsanforderungsnachricht, die den Berechtigungsnachweis mit beschränktem Zugriff umfasst;
Übertragen der Autorisierungsanforderungsnachricht an den Autorisierungsentitätscomputer (160); und
Empfangen einer Autorisierungsantwortnachricht von dem Autorisierungsentitätscomputer (160).

15. Verfahren, umfassend:
Empfangen, durch einen Autorisierungsentitätscomputer (160) von einem Ressourcenanbietercomputer (170), von Interaktionsverlaufsdaten, die sich auf vergangene Interaktionen zwischen dem Ressourcenanbietercomputer (170) und einem Benutzer (110), der eine Kommunikationsvorrichtung (120) betreibt, beziehen, und von Daten, die eine biometrische Probe des Benutzers (110) darstellen, die über die Kommunikationsvorrichtung (120) erhalten wird, wobei die Daten, die die biometrische Probe darstellen, in Reaktion auf Anweisungen erzeugt werden, die dem Benutzer (110) über die Kommunikationsvorrichtung (120) zum Erhalten der biometrischen Probe bereitgestellt werden;
Bestimmen, durch den Autorisierungsentitätscomputer (160), eines Berechtigungsnachweises mit beschränktem Zugriff in Reaktion auf das Empfangen der Interaktionsverlaufsdaten und der Daten, die die biometrische Probe darstellen; und
Übertragen, durch den Autorisierungsentitätscomputer (160), des Berechtigungsnachweises mit beschränktem Zugriff an den Ressourcenanbietercomputer (160).

## Revendications

1. Procédé comprenant :
la réception, par un ordinateur de fournisseur de ressources (170) exploité par un fournisseur de ressources, d'une demande provenant d'un dispositif de communication (120) exploité par un utilisateur (110) pour obtenir un justificatif d'identité d'accès restreint afin d'accéder à une ressource, la demande comportant des données représentant un échantillon biométrique de l'utilisateur (110) obtenu via le dispositif de communication (120), les données représentant l'échantillon biométrique étant générées en réponse à des instructions fournies à l'utilisateur (110) via le dispositif de communication (120) pour obtenir l'échantillon biométrique ;
la génération, par l'ordinateur fournisseur de ressources (170), de données d'historique d'interactions concernant des interactions passées entre l'ordinateur fournisseur de ressources (170) et le dispositif de communication (120) ;
la transmission, par l'ordinateur fournisseur de ressources (170), des données d'historique d'interactions concernant les interactions passées et des données représentant l'échantillon biométrique, à un ordinateur d'entité d'autorisation (160), l'ordinateur d'entité d'autorisation (160) déterminant un justificatif d'identité d'accès restreint en réponse à la réception des données d'historique d'interactions et des données représentant l'échantillon biométrique ; et
la réception, par l'ordinateur fournisseur de ressources (170), du justificatif d'identité d'accès restreint à partir de l'ordinateur d'entité d'autorisation (160), dans lequel le justificatif d'identité d'accès restreint permet à l'utilisateur du dispositif de communication (120) d'obtenir la ressource.

2. Procédé selon la revendication 1, dans lequel l'autorisation d'accès restreint a une durée limitée et a des autorisations limitées.

3. Procédé selon la revendication 1, dans lequel la ressource comporte des données en ligne.

4. Procédé selon la revendication 1, dans lequel les données d'historique d'interactions comprennent un nombre de fois où l'utilisateur (110) a interagi avec l'ordinateur fournisseur de ressources (170).

5. Procédé selon la revendication 4, dans lequel les données d'historique d'interactions comprennent une valeur associée au nombre de fois où l'utilisateur (110) a interagi avec l'ordinateur fournisseur de ressources.

6. Procédé selon la revendication 1, dans lequel la demande comprend en outre des données représentant des données représentant un jeton d'authentification physique authentifiant l'utilisateur (110), et dans lequel l'ordinateur fournisseur de ressources (170) transmet les données représentant le jeton d'authentification physique authentifiant l'utilisateur à l'ordinateur d'entité d'autorisation (160) avec les données d'historique d'interactions.

7. Procédé selon la revendication 1, comprenant en outre :
la génération, par l'ordinateur fournisseur de ressources (170), d'un message de demande d'autorisation comprenant le justificatif d'identité d'accès restreint ;
la transmission, par l'ordinateur fournisseur de ressources (170), du message de demande d'autorisation à l'ordinateur d'entité d'autorisation (160) ; et
la réception d'un message de réponse d'autorisation depuis l'ordinateur d'entité d'autorisation (160).

8. Ordinateur comprenant :
un processeur (170A) ; et
un support lisible par ordinateur (170D), le support lisible par ordinateur (170D) comprenant un code, exécutable par le processeur (170A), pour mettre en œuvre un procédé comprenant :
la réception d'une demande provenant d'un dispositif de communication (120) exploité par un utilisateur (110) pour obtenir un justificatif d'identité d'accès restreint afin d'accéder à une ressource, la demande comportant des données représentant un échantillon biométrique de l'utilisateur (110) obtenu via le dispositif de communication (120), les données représentant l'échantillon biométrique étant générées en réponse à des instructions fournies à l'utilisateur (110) via le dispositif de communication (120) pour obtenir l'échantillon biométrique ;
la génération de données d'historique d'interactions concernant des interactions passées entre un ordinateur de fournisseur de ressources (170) exploité par un fournisseur de ressources et l'utilisateur (110) du dispositif de communication (120) ;
la transmission des données d'historique d'interactions concernant les interactions passées et les données représentant l'échantillon biométrique, à un ordinateur d'entité d'autorisation (160), l'ordinateur d'entité d'autorisation (160) déterminant un justificatif d'identité d'accès restreint en réponse à la réception des données d'historique d'interactions et des données représentant l'échantillon biométrique ; et
la réception du justificatif d'identité d'accès restreint à partir de l'ordinateur d'entité d'autorisation (160), dans lequel le justificatif d'identité d'accès restreint permet à l'utilisateur (110) du dispositif de communication (120) d'obtenir la ressource.

9. Ordinateur selon la revendication 8, dans lequel l'autorisation d'accès restreint a une durée limitée et a des autorisations limitées.

10. Ordinateur selon la revendication 8, dans lequel la ressource comporte des données en ligne.

11. Ordinateur selon la revendication 8, dans lequel les données d'historique d'interactions comprennent un nombre de fois où l'utilisateur (110) a interagi avec l'ordinateur fournisseur de ressources (170).

12. Ordinateur selon la revendication 11, dans lequel les données d'historique d'interactions comprennent une valeur associée au nombre de fois où l'utilisateur (110) a interagi avec l'ordinateur fournisseur de ressources (170) .

13. Ordinateur selon la revendication 8, dans lequel la demande comprend en outre des données représentant un jeton d'authentification physique authentifiant l'utilisateur (110).

14. Ordinateur selon la revendication 8, dans lequel le procédé comprend en outre :
la génération d'un message de demande d'autorisation comprenant le justificatif d'identité d'accès restreint ;
la transmission du message de demande d'autorisation à l'ordinateur d'entité d'autorisation (160) ; et
la réception d'un message de réponse d'autorisation depuis l'ordinateur d'entité d'autorisation (160).

15. Procédé comprenant :
la réception, par un ordinateur d'entité d'autorisation (160) à partir d'un ordinateur de fournisseur de ressources (170), de données d'historique d'interactions concernant des interactions passées entre l'ordinateur fournisseur de ressources (170) et un utilisateur (110) exploitant un dispositif de communication (120) et des données représentant un échantillon biométrique de l'utilisateur (110) obtenu via le dispositif de communication (120), les données représentant l'échantillon biométrique étant générées en réponse à des instructions fournies à l'utilisateur (110) via le dispositif de communication (120) pour obtenir l'échantillon biométrique ;
la détermination, par l'ordinateur d'entité d'autorisation (160), d'un justificatif d'identité d'accès restreint en réponse à la réception des données d'historique d'interactions et des données représentant l'échantillon biométrique ; et
la transmission, par l'ordinateur d'entité d'autorisation (160), du justificatif d'identité d'accès restreint à l'ordinateur fournisseur de ressources (160) .
